# EUROPÄISCHE PATENTANMELDUNG

(11) **EP 2 744 299 A1**
(43) Veröffentlichungstag der Anmeldung: **18.06.2014**
(21) Anmeldenummer: 13195716.9
(22) Anmeldetag: 04.12.2013
(51) Int. Cl.: H05B 6/06, H05B 6/08, H05B 6/12

(54) **Hausgeräteinduktionsheizvorrichtung**

(30) Priorität: 11.12.2012 ES 201231920
(71) Anmelder: BSH Bosch und Siemens Hausgeräte GmbH, 81739 München (DE)
(72) Erfinder: Aranda Vazquez, Sandra, 50018 Zaragoza (ES); Calvo Mestre, Carlos, 50019 Zaragoza (ES); Hernandez Blasco, Pablo Jesus, 50410 Cuarte de Huerva (Zaragoza) (ES); Llorente Gil, Sergio, 50009 Zaragoza (ES); Palacios Tomas, Daniel, 50008 Zaragoza (ES); Puyal Puente, Diego, 50014 Zaragoza (ES); Sarnago Andia, Hector, 42110 Olvega (Soria) (ES)

(57) **Zusammenfassung**

Um eine hohe elektrische Effizienz zu erreichen, wird eine Hausgeräteinduktionsheizvorrichtung (12, 12'), insbesondere eine Kochfeldinduktionsheizvorrichtung, mit zumindest einem ersten Induktor (20, 20'), zumindest einer Parallelkapazität (24) und zumindest einem, von einem Bestandteil einer Heizfrequenzeinheit (30) verschiedenen Schaltelement (26), das dazu vorgesehen ist, die Parallelkapazität (24) in zumindest einem Betriebsmodus anhaltend dem ersten Induktor (20) zumindest im Wesentlichen parallel zu schalten, vorgeschlagen.

## Beschreibung

Die Erfindung geht aus von einer Hausgeräteinduktionsheizvorrichtung nach dem Oberbegriff des Anspruchs 1.

Es sind verschiedene Induktionskochfelder bekannt, die Induktoren, Kapazitäten und

Die Aufgabe der Erfindung besteht insbesondere darin, eine gattungsgemäße Vorrichtung mit verbesserten Eigenschaften hinsichtlich einer hohen Effizienz bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung betrifft eine Hausgeräteinduktionsheizvorrichtung, insbesondere eine Kochfeldinduktionsheizvorrichtung, mit zumindest einem ersten Induktor, zumindest einer Parallelkapazität und zumindest einem, von einem Bestandteil einer Heizfrequenzeinheit verschiedenen Schaltelement, das dazu vorgesehen ist, die Parallelkapazität in zumindest einem Betriebsmodus anhaltend dem ersten Induktor zumindest im Wesentlichen parallel zu schalten. Insbesondere ist das Schaltelement in zumindest einem weiteren Betriebsmodus dazu vorgesehen, eine Parallelschaltung der Parallelkapazität und des ersten Induktors anhaltend zu trennen. Unter einem "Induktor" soll insbesondere ein Heizelement verstanden werden, das dazu vorgesehen ist, einen elektrischen Wechselstrom, insbesondere mit einer Frequenz zwischen 10 kHz und 150 kHz, vorteilhaft zwischen 20 kHz und 100 kHz, in ein elektromagnetisches Wechselfeld umzuwandeln, welches dazu vorgesehen ist, in einem, vorteilhaft in einem Nahbereich des Induktors angeordneten, insbesondere metallischen, vorteilhaft ferromagnetischen, Heizmittel, insbesondere einem Gargeschirrboden bzw. einem Backofenheizkörper, Wirbelströme und/oder Ummagnetisierungseffekte in Wärme umzuwandeln. Insbesondere ist der Induktor als Leiterschleife, insbesondere als Flachspule, vorzugsweise in Form einer Kreisscheibe, alternativ in Form eines Ovals, eines Rechtecks oder einer anderen dem Fachmann als geeignet erscheinenden Form, ausgebildet. Insbesondere ist der Induktor dazu vorgesehen, in zumindest einem Betriebsmodus eine Leistung von zumindest 100 W, insbesondere zumindest 300 W, vorteilhaft zumindest 1000 W, vorzugsweise zumindest 2000 W, zu übertragen. Vorzugsweise unterscheidet sich die Parallelkapazität von einer Kapazität, die in zumindest einem Betriebszustand gemeinsam mit dem ersten Induktor und zumindest einem Teil der Heizfrequenzeinheit einen geschlossenen Reihenschaltkreis bildet. Insbesondere weist die Parallelkapazität eine Kapazität von zumindest 10 nF, vorteilhaft zumindest 30 nF, vorzugsweise zumindest 100 nF auf. Insbesondere weist die Parallelkapazität eine Kapazität von maximal 300 nF, insbesondere maximal 250 nF, vorteilhaft maximal 200 nF, auf. Insbesondere ist die Parallelkapazität von zumindest einer, insbesondere genau einer, elektrischen Komponente, insbesondere einem Kondensator, gebildet. Alternativ ist es denkbar, dass die Parallelkapazität von zumindest zwei Bauteilen, insbesondere Kondensatoren, gebildet ist, die in Reihe und/oder parallel zueinander geschaltet sind. Unter einem Schaltelement soll insbesondere eine elektrische Komponente verstanden werden, die zumindest zwei Leistungskontakte und zumindest zwei Schaltkontakte aufweist, wobei insbesondere einer der Schaltkontakte mit einem der Leistungskontakte, zumindest leitenden verbunden, insbesondere einstückig ausgebildet, ist, und die dazu vorgesehen ist, einen Leitwert zwischen den Leistungskontakten in Abhängigkeit von einem elektrischen Signal, insbesondere einem Strom und/oder einer Spannung, zwischen bzw. über den Schaltkontakten, vorzugsweise zwischen Werten von 0 S und zumindest 100 S, vorteilhaft zumindest 200 S, besonders vorteilhaft zumindest 500 S, einzustellen. Insbesondere ist das Schaltelement als Relais, insbesondere als einpoliger Einschalter, ausgebildet. Alternativ ist es denkbar, dass das Schaltelement als Halbleiterbauteil, insbesondere als Transistor, ausgebildet ist. Unter einer "Heizfrequenzeinheit" soll insbesondere eine elektrische Baugruppe verstanden werden, die dazu vorgesehen ist, in zumindest einem Betriebszustand einen elektrischen Wechselstrom, insbesondere mit einer Heizfrequenz zwischen 10 kHz und 150 kHz, insbesondere zwischen 20 kHz und 100 kHz, vorteilhaft mit einer Stromstärke von zumindest 0,5 A, insbesondere zumindest 2 A, vorteilhaft zumindest 8 A, vorzugsweise zumindest 13 A, zu erzeugen. Insbesondere weist die Heizfrequenzeinheit zumindest ein, vorteilhaft zumindest zwei, Schaltelemente auf, die vorteilhaft als Halbleiterschaltelemente, insbesondere als IGBTs, ausgebildet sind. Vorzugsweise ist die Heizfrequenzeinheit als Wechselrichter, alternativ als Frequenzumrichter, ausgebildet. Vorteilhaft weist die Heizfrequenzeinheit einen Heizfrequenzkontakt auf, der insbesondere an einem Mittelabgriff zweier in Reihe geschalteter Schaltelemente, die vorzugsweise in einem Betriebsmodus zumindest im Wesentlichen abwechselnd periodisch aktiviert werden, ausgebildet ist. Insbesondere ist zumindest der erste Induktor an den Heizfrequenzkontakt angeschlossen. Insbesondere weist die Heizfrequenzeinheit zumindest eine Snubberkapazität auf, die jeweils zu einem der Schaltelemente parallel geschaltet ist, um Schaltverluste gering zu halten. Vorteilhaft weist die Heizfrequenzeinheit zumindest eine Freilaufdiode auf, die jeweils parallel zu dem zumindest einen Schaltelement angeordnet ist, um einen einfachen Schaltvorgang zu erreichen. Vorzugsweise weist die Hausgeräteinduktionsheizvorrichtung zumindest eine Steuereinheit auf, die dazu vorgesehen ist, zumindest Schaltzustände der Heizfrequenzeinheit und des Schaltelements zu steuern. Insbesondere weist die Steuereinheit zumindest eine Prozessoreinheit und zumindest eine Speichereinheit mit einem vorzugsweise darin hinterlegten Betriebsprogramm, das dazu vorgesehen ist, von der Prozessoreinheit ausgeführt zu werden, auf. Unter "anhaltend" soll insbesondere eine kontinuierliche Zeitspanne von zumindest 0,1 s, insbesondere zumindest 1 s, vorzugsweise zumindest 10 s, verstanden werden. Darunter, dass die Parallelkapazität über das Schaltelement dem ersten Induktor im Wesentlich "parallel geschaltet" ist, soll insbesondere verstanden werden, dass ein geschlossener Leitungspfad existiert, der bis auf Kapazitäten, insbesondere lediglich die Parallelkapazität, und Induktoren, insbesondere lediglich dem ersten Induktor, lediglich Widerstände, insbesondere Leitungswiderstände, Sensoren, insbesondere Stromsensoren, und, von Teilen der Heizfrequenzeinheit verschiedene, Schaltelemente, insbesondere lediglich das eine Schaltelement, aufweist. Unter "vorgesehen" soll insbesondere speziell programmiert, ausgelegt und/oder ausgestattet verstanden werden.

Durch die erfindungsgemäße Ausgestaltung kann insbesondere eine Ausgestaltung mit einer hohen elektrischen Effizienz erreicht werden. Insbesondere kann in Abhängigkeit von einer für den ersten Induktor angeforderten Leistung eine Steuereinheit die Parallelkapazität parallel schalten, um eine Resonanzkurve derartig zu verschieben, dass der Induktor mit einer geringen Heizfrequenz, bzw. einer Heizfrequenz näher an der Resonanzfrequenz, betrieben werden kann, um die angeforderte Heizleistung zu liefern, wobei aufgrund der geringen Heizfrequenz und/oder der Nähe zur Resonanzfrequenz geringe Schaltverluste in der Heizfrequenzeinheit erreicht werden können.

Weiterhin wird vorgeschlagen, dass die Hausgeräteinduktionsheizvorrichtung eine Heizfrequenzeinheit und eine Hauptresonanzeinheit aufweist, wobei zumindest der erste Induktor zwischen die Hauptresonanzeinheit und die Heizfrequenzeinheit geschaltete ist. Insbesondere ist der erste Induktor in einem Brückenzweig einer Halbbrückenschaltung angeordnet. Alternativ ist es denkbar, dass der erste Induktor in einem Brückenzweig einer Vollbrückenschaltung angeordnet ist. Unter einer "Hauptresonanzeinheit" soll insbesondere eine Resonanzeinheit verstanden werden, die vorzugsweise unabhängig von einem Betriebszustand mit dem ersten Induktor verbunden ist. Unter einer "Resonanzeinheit" soll insbesondere eine Einheit verstanden werden, die zumindest eine Resonanzkapazität, die vorzugsweise von zumindest einem Kondensator gebildet ist, umfasst, der vorzugsweise von einer Snubberkapazität und/oder einer Kapazität, die zu einem Schaltelement parallel geschaltet ist, verschieden ist. Insbesondere ist eine Resonanzkapazität von einer Kombination aus Reihen- und Parallelschaltungen von mehreren Kondensatoren gebildet. Die Resonanzkapazität ist insbesondere Bestandteil eines elektrischen Schwingkreises, insbesondere eines elektrischen Reihenschwingkreises. Vorzugsweise ist die Resonanzkapazität in zumindest einem Betriebszustand, insbesondere über ein Schaltelement, in Reihe mit dem Induktor geschaltet und ist besonders vorteilhaft dazu vorgesehen, über den Induktor durch zumindest eine Heizfrequenzeinheit aufgeladen zu werden, insbesondere wenn der Induktor durch die Schaltanordnung auf ein höheres elektrisches Potential gelegt wird. Die Resonanzkapazität ist insbesondere auf einer, in Richtung eines Leitungspfads gesehen, von der Frequenzeinheit abgewandten Seite des Induktors angeordnet. In einer Vollbrückenschaltung ist der Induktor gemeinsam mit einer, vorzugsweise in Reihe zum Induktor geschalteten, Resonanzkapazität zwischen zwei von Heizfrequenzeinheiten gebildeten Spannungsteilern im Brückenzweig angeordnet. In einer Halbbrückenschaltung ist die Induktor zwischen einem von der Heizfrequenzeinheit gebildeten Spannungsteiler und einem, von zwei Resonanzkapazitäten gebildeten, Spannungsteiler im Brückenzweig angeordnet. Insbesondere ist die Parallelkapazität in zumindest dem einen Betriebszustand zwischen die Hauptresonanzeinheit und die Heizfrequenzeinheit geschaltet. Insbesondere ist die Parallelkapazität in dem Brückenzweig zwischen der Hauptresonanzeinheit und der Heizfrequenzeinheit angeordnet, bzw. zwischen den beiden Heizfrequenzeinheiten in Reihe zu der Hauptresonanzeinheit angeordnet. Es kann insbesondere eine effiziente Ausgestaltung erreicht werden.

Ferner wird vorgeschlagen, dass die Hausgeräteinduktionsheizvorrichtung zumindest einen zweiten Induktor und zumindest ein Schaltelement aufweist, das dazu vorgesehen ist, den zweiten Induktor in zumindest einem Betriebsmodus zumindest im Wesentlichen dem ersten Induktor parallel zu schalten. Darunter, dass der zweite Induktor über das Schaltelement zu dem ersten Induktor im Wesentlich "parallel geschaltet" ist, soll insbesondere verstanden werden, dass ein geschlossener Leitungspfad existiert, der bis auf Kapazitäten, insbesondere lediglich die Parallelkapazität, vorteilhaft gar keine Kapazität, und Induktoren, insbesondere lediglich dem ersten und zweiten Induktor, lediglich Widerstände, insbesondere Leitungswiderstände, Sensoren, insbesondere Stromsensoren, und, von Teilen der Heizfrequenzeinheit verschiedene, Schaltelemente, insbesondere lediglich das eine Schaltelement, aufweist. Es kann insbesondere eine flexible Ausgestaltung erreicht werden. Vorteilhaft schaltet das Schaltelement zumindest in dem einen Betriebsmodus sowohl die Parallelkapazität als auch den zweiten Induktor dem ersten Induktor zumindest im Wesentlichen parallel. Insbesondere sind der zweite Induktor und die Parallelkapazität permanent zumindest im Wesentlichen parallel geschaltet. Alternativ ist es denkbar, dass das Schaltelement als zweipoliger Einschalter ausgebildet ist und in dem Betriebsmodus die Parallelkapazität über einen ersten Schaltpfad und der zweite Induktor über einen zweiten Schaltpfad zu dem ersten Induktor zumindest im Wesentlichen parallel geschaltet sind. Es kann insbesondere eine einfache Ausgestaltung erreicht werden. Weiterhin ist es denkbar, dass die Hausgerätevorrichtung mehr als einen zweiten Induktor aufweist, wobei die zweiten Induktoren vorteilhaft unabhängig, alternativ einer bestimmten Reihe nach, über weitere Schaltelemente zu dem ersten Induktor parallel geschaltet werden können. Insbesondere ist es denkbar, dass jedem der zweiten Induktoren eine Parallelkapazität parallel geschaltet ist. Alternativ ist es denkbar, dass lediglich eine Auswahl, insbesondere lediglich einem, insbesondere einem ersten, der zweiten Induktoren eine Parallelkapazität parallel geschaltet ist. Ferner ist es denkbar, dass die Parallelkapazität, insbesondere auch mehrere Parallelkapazitäten über mehrere Schaltelemente, separat von den zweiten Induktoren, insbesondere in Abhängigkeit von einer Anzahl an, dem ersten Induktor parallel geschalteten, zweiten Induktoren, zu dem ersten Induktor parallelschaltbar sind.

Weiterhin wird vorgeschlagen, dass die Hausgeräteinduktionsheizvorrichtung zumindest einen Stromsensor aufweist, der zumindest in dem Betriebsmodus zwischen der Parallelkapazität und dem ersten Induktor angeordnet ist und zu einer Leistungsbestimmung zumindest des ersten Induktors genutzt wird. Vorzugsweise ist der Stromsensor in Reihe mit der Heizfrequenzeinheit und zumindest dem ersten Induktor, vorteilhaft auch dem zumindest einen zweiten Induktoren, geschaltet. Es kann insbesondere eine vorteilhafte Leistungsbestimmung zumindest des ersten Induktors, insbesondere eine Bestimmung einer Summenleistung des ersten Induktors und des zumindest einen zweiten Induktors, erreicht werden, da an diesem Punkt ein Stromfluss wesentlich glatter sein kann als unmittelbar hinter der Heizfrequenzeinheit. Insbesondere kann eine Bauteilersparnis erreicht werden. Alternativ ist es denkbar, dass der Stromsensor zwischen dem ersten und dem zweiten Induktor angeordnet ist und das die Hausgeräteinduktionsheizvorrichtung zumindest einen weiteren Stromsensor aufweist, der zumindest in dem Betriebsmodus zwischen der Parallelkapazität und der zweiten Induktivität angeordnet ist, wodurch eine separate Leistungsbestimmung möglich ist. Alternativ oder zusätzlich ist es denkbar, dass der bzw. ein Stromsensor zwischen der Heizfrequenzeinheit und dem parallel geschalteten ersten Induktor, dem zweiten Induktor und/oder der Parallelkapazität angeordnet ist, wodurch eine gute Kontrolle eines Stroms der Heizfrequenzeinheit ermöglicht wird.

Ferner wird vorgeschlagen, dass der erste und der zweite Induktor in zumindest einem Betriebsmodus eine gemeinsame Heizzone, insbesondere eine Bräterzone, bilden. Insbesondere weist die Kochfeldvorrichtung eine Steuereinheit und eine Bedieneinheit auf, die es einem Bediener erlauben, eine einzelne Heizleistung für die gemeinsame Heizzone festzulegen. Insbesondere weisen der erste und der zweite Induktor einen Abstand von weniger als 5 cm, insbesondere weniger als 3 cm, vorteilhaft weniger als 1 cm auf. Insbesondere ist der erste Induktor kreisförmig ausgebildet. Insbesondere ist der zweite Induktor elliptisch ausgebildet, wobei eine Längsachse des zweiten Induktors eine Länge aufweist, die im Wesentlichen einem Durchmesser des ersten Induktors entspricht, insbesondere weniger als 20 %, vorteilhaft weniger als 10 %, vorzugsweise weniger als 5 %, von diesem abweicht. Insbesondere ist es denkbar, dass auch der zweite Induktor kreisförmig ausgebildet ist. Weiterhin ist es denkbar, dass der zweite Induktor eine halbkreisartige oder eine teilweise gar sichelförmige Form aufweist, die sich insbesondere an den ersten Induktor anschmiegt. Insbesondere ist es denkbar, dass die Induktoren im Wesentlichen rechteckige und/oder quadratische Formen aufweisen. Alternativ ist es beispielsweise denkbar, dass der zweite Induktor ringförmig ausgebildet ist und den ersten Induktor zumindest im Wesentlichen umschließt. Es kann insbesondere ein hoher Komfort und/oder eine hohe Flexibilität erreicht werden.

Weiterhin wird vorgeschlagen, dass die Hausgeräteinduktionsheizvorrichtung zumindest eine weitere Resonanzeinheit und zumindest ein weiteres Schaltelement aufweist, das die weitere Resonanzeinheit in zumindest einem Betriebsmodus in Reihe zu dem zweiten Induktor schaltet. Vorteilhaft ist das weitere Schaltelement dazu vorgesehen, die weitere Resonanzeinheit, unabhängig von einem Schaltzustand des Schaltelements, zu dem zweiten Induktor in Reihe zu schalten. Es kann insbesondere eine hohe Vielfalt an Betriebsmodi erreicht werden, wobei vorteilhaft durch die Steuereinheit ein, insbesondere leistungsabhängig, effektiver Betriebsmodus auswählbar ist. Um eine Bauteilersparnis zu erreichen, kann vorteilhaft auf eine Ausgestaltung mit einem weiteren Schaltelement und einer weiteren Resonanzeinheit verzichtet werden.

Ferner wird vorgeschlagen, dass die Hausgeräteinduktionsheizvorrichtung zumindest eine Steuereinheit aufweist, die einen Schaltzustand des zumindest einen Schaltelements in Abhängigkeit von einer zumindest für den ersten Induktor angeforderten Heizleistung und/oder in Abhängigkeit von einer angeforderten Anzahl an parallel geschalteten Induktoren, einstellt. Es kann insbesondere eine hohe Effizienz erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen in schematischer Darstellung:
- Fig. 1: ein erfindungsgemäßes Kochfeld mit zwei erfindungsgemäßen Kochfeldvorrichtungen in einer Ansicht von oben,
- Fig. 2: einen Schaltkreis einer erfindungsgemäßen Kochfeldinduktionsheizvorrichtung,
- Fig. 3: ein Verlaufsdiagramm für elektrische Kenngrößen der Kochfeldinduktionsheizvorrichtung in einem Betriebszustand,
- Fig. 4: ein Verlaufsdiagramm für elektrische Kenngrößen einer Heizfrequenzeinheit in einem Betriebszustand,
- Fig. 5: einen Vergleich einer Heizleistungs-Heizfrequenzabhängigkeit mit und ohne Parallelkapazität und
- Fig. 6: einen Vergleich eines gemessenen Stroms für unterschiedliche Stromsensorpositionen.

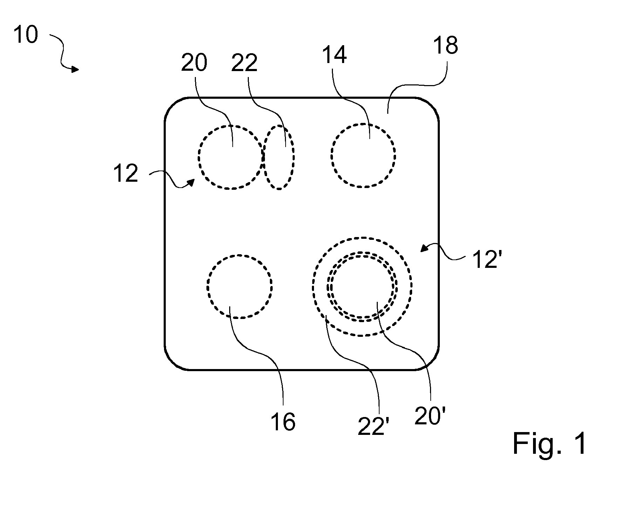

Figur 1 zeigt ein als Induktionskochfeld ausgebildetes Hausgerät 10 mit zwei als Kochfeldinduktionsheizvorrichtungen ausgebildeten Hausgeräteinduktionsheizvorrichtungen 12, 12'. Weiterhin weist das Hausgerät 10 zwei weitere Induktoren 14, 16 auf. Die Hausgeräteinduktionsheizvorrichtungen 12,12' weisen jeweils einen ersten Induktor 20, 20' und einen zweiten Induktor 22, 22' auf. Die Induktoren 14, 16, 20, 20', 22, 22' sind an einer Unterseite einer Kochfeldplatte 18 angeordnet. Die weiteren Induktoren 14, 16 bilden jeweils eine kreisförmige Kochzone aus. Eine erste der Hausgeräteinduktionsheizvorrichtungen 12 bildet von einem Betriebsmodus abhängig eine kreisrunde oder eine längliche, im Wesentlichen Ovale, Heizzone aus. Der erste und zweite Induktor 20, 22 bilden in mehreren Betriebsmodi eine gemeinsame Heizzone. Der zweite Induktor 22 ist neben dem ersten Induktor 20, an diesem angrenzend, angeordnet. Eine zweite der Hausgeräteinduktionsheizvorrichtungen 12' bildet betriebsmodusabhängig unterschiedlich große kreisförmige Heizzonen aus. Deren zweiter Induktor 22' umschließt den ersten Induktor 20'. Die Induktoren 20', 22' sind konzentrisch angeordnet. Der erste und der zweite Induktor 20', 22' bilden in mehreren Betriebsmodi eine gemeinsame Heizzone aus.

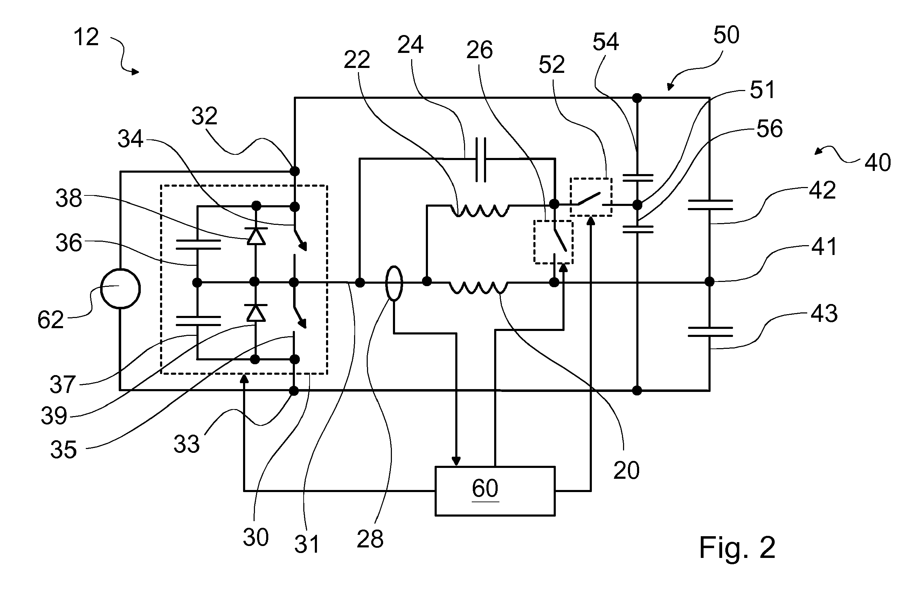

Figur 2 zeigt am Beispiel der ersten Hausgeräteinduktionsheizvorrichtung 12 einen prinzipiellen Schaltplan der Hausgeräteinduktionsheizvorrichtungen 12, 12'. Die Hausgeräteinduktionsheizvorrichtung 12 weist eine Heizfrequenzeinheit 30 auf. Die Heizfrequenzeinheit 30 weist einen ersten Leistungskontakt 32 und einen zweiten Leistungskontakt 33 auf, die mit Polen einer Spannungsversorgung 62 verbunden sind. Die Heizfrequenzeinheit 30 weist zwei als IGBTs ausgebildete, in Reihe geschaltete Schaltelemente 34, 35 auf. Die Schaltelemente 34, 35 sind jeweils an einen der Leistungskontakte 32, 33 und an das jeweils andere Schaltelement 34, 35 angeschlossen. Jedem der Schaltelemente 34, 35 ist eine Snubberkapazität 36, 37 und eine Freilaufdiode 38, 39 parallel geschaltet. Die Heizfrequenzeinheit 30 weist einen Heizfrequenzausgang 31 auf. Der Heizfrequenzausgang 31 ist von einem gemeinsamen Kontaktpunkt der beiden Schaltelemente 34, 35 gebildet.

Die Hausgeräteinduktionsheizvorrichtung 12 weist eine Parallelkapazität 24 und ein, von einem Bestandteil der Heizfrequenzeinheit 30 verschiedenen, Schaltelement 26 auf, das dazu vorgesehen ist, die Parallelkapazität 24 in zumindest einem Betriebsmodus anhaltend dem ersten Induktor 20 im Wesentlichen parallel zu schalten.

Die Hausgeräteinduktionsheizvorrichtung 12 weist weiterhin eine Hauptresonanzeinheit 40 auf. Der erste Induktor 20 ist zwischen die Hauptresonanzeinheit 40 und die Heizfrequenzeinheit 30 geschaltet. Die Hauptresonanzeinheit 40 ist von einer Reihenschaltung zweier Resonanzkapazitäten 42, 43 gebildet, die zwischen den Leistungskontakten 32, 33 der Heizfrequenzeinheit 30 angeordnet ist. Die Resonanzkapazitäten 42, 43 sind über einen gemeinsamen Kontakt 41 verbunden. Der erste Induktor 20 ist zwischen dem Heizfrequenzausgang 31 und dem gemeinsamen Kontakt 41 angeordnet. Die Parallelkapazität 24 ist in Reihe mit dem Schaltelement 26 zwischen dem Heizfrequenzausgang 31 und dem gemeinsamen Kontakt 41 angeordnet.

Das Schaltelement 26 ist dazu vorgesehen, den zweiten Induktor 22 in mehreren Betriebsmodi dem ersten Induktor 20 parallel zu schalten. Der zweite Induktor 22 ist unabhängig von einem Betriebszustand der Parallelkapazität 24 parallel geschaltet. Das Schaltelement 26 schaltet somit sowohl die Parallelkapazität 24 als auch den zweiten Induktor 22 dem ersten Induktor 20 zumindest im Wesentlichen parallel. Der zweite Induktor 22 ist in Reihe mit dem Schaltelement 26 zwischen dem Heizfrequenzausgang 31 und dem gemeinsamen Kontakt 41 der Hauptresonanzeinheit 40 angeordnet.

Weiterhin weist die Hausgeräteinduktionsheizvorrichtung 12 einen Stromsensor 28 auf, der zwischen der Parallelkapazität 24 und dem ersten Induktor 20 angeordnet ist und zu einer Leistungsbestimmung des ersten Induktors 20 bzw. der Parallelschaltung des ersten und zweiten Induktors 20, 22 genutzt wird. Der Stromsensor 28 ist als Induktivsensor ausgebildet. Der Stromsensor 28 misst einen Stromfluss zwischen dem Heizfrequenzausgang 31 und dem ersten Induktor 20. Ein erster Kontakt der Parallelkapazität 24 ist unmittelbar mit dem Heizfrequenzausgang 31 und mit einem ersten Kontakt des ersten Induktors 20 verbunden. Der erste Kontakt des ersten Induktors 20 und ein erster Kontakt des zweiten Induktors 22 sind unmittelbar miteinander verbunden. Ein zweiter Kontakt der Parallelkapazität 24 und ein zweiter Kontakt des zweiten Induktors 22 sind unmittelbar miteinander verbunden. Der Stromsensor 28 misst einen Stromfluss zwischen dem ersten Kontakt der Parallelkapazität 24 und dem ersten Kontakt des ersten Induktors 20. Der Stromsensor 28 misst einen Stromfluss zwischen dem ersten Kontakt der Parallelkapazität 24 und dem ersten Kontakt des zweiten Induktors 22. Der Stromsensor 28 misst einen Stromfluss zwischen dem Heizfrequenzausgang 31 und dem ersten Kontakt des ersten Induktors 22. Der Stromsensor 28 misst einen Stromfluss zwischen dem Heizfrequenzausgang 31 und dem ersten Kontakt des zweiten Induktors 22.

Der zweite Kontakt des zweiten Induktors 22 ist mit einem ersten Kontakt des Schaltelements 26 verbunden. Der zweite Kontakt der Parallelkapazität 24 ist mit dem ersten Kontakt des Schaltelements 26 verbunden. Ein zweiter Kontakt des Schaltelements 26 ist mit einem zweiten Kontakt des ersten Induktors 20 verbunden. Der zweite Kontakt des Schaltelements 26 ist mit dem gemeinsamen Kontakt 41 der Hauptresonanzeinheit 40 unmittelbar verbunden. Der zweite Kontakt des ersten Induktors 20 ist mit dem gemeinsamen Kontakt 41 der Hauptresonanzeinheit 40 unmittelbar verbunden.

Die Hausgeräteinduktionsheizvorrichtung 12 weist eine weitere Resonanzeinheit 50 und ein weiteres Schaltelement 52 auf, das die weitere Resonanzeinheit 50 in einem Betriebsmodus in Reihe zu dem zweiten Induktor 22 schaltet. Die weitere Resonanzeinheit 50 ist von zwei Resonanzkapazitäten 54, 56 gebildet, die in Reihe zwischen den Leistungskontakten 32, 33 der Heizfrequenzeinheit 30 geschaltet sind. Ein erster Kontakt des weiteren Schaltelements 52 ist unmittelbar mit dem zweiten Kontakt des zweiten Induktors 22 verbunden. Der erste Kontakt des weiteren Schaltelements 52 ist unmittelbar mit dem zweiten Kontakt der Parallelkapazität 24 verbunden. Der erste Kontakt des weiteren Schaltelements 52 ist unmittelbar mit dem ersten Kontakt des Schaltelements 26 verbunden. Ein zweiter Kontakt des weiteren Schaltelements 52 ist unmittelbar mit einem gemeinsamen Kontakt 51 der beiden Resonanzkapazitäten 54, 56 der weiteren Resonanzeinheit 50 verbunden. Das Schaltelement 26 und das weitere Schaltelement 52 sind als Relais ausgebildet.

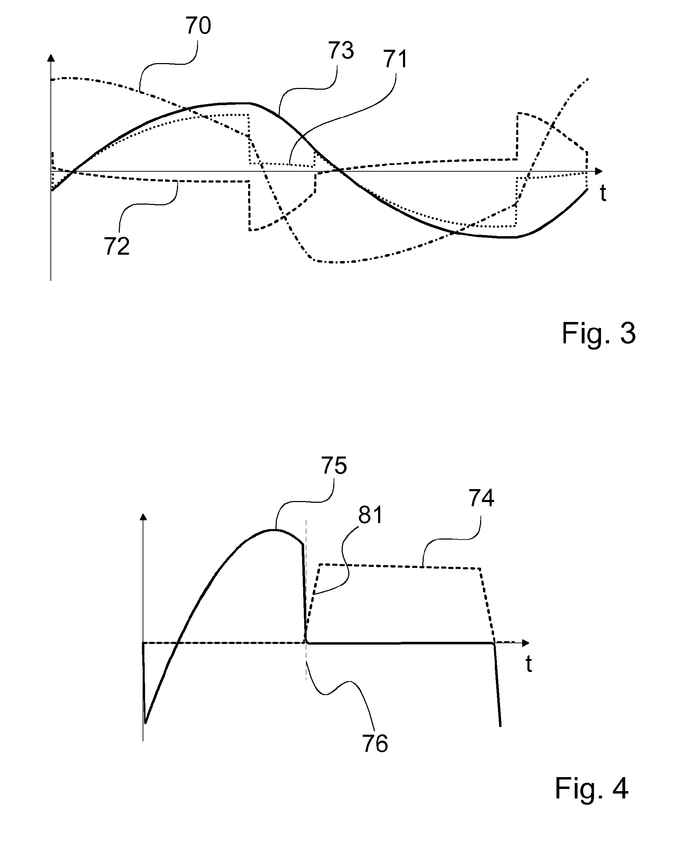

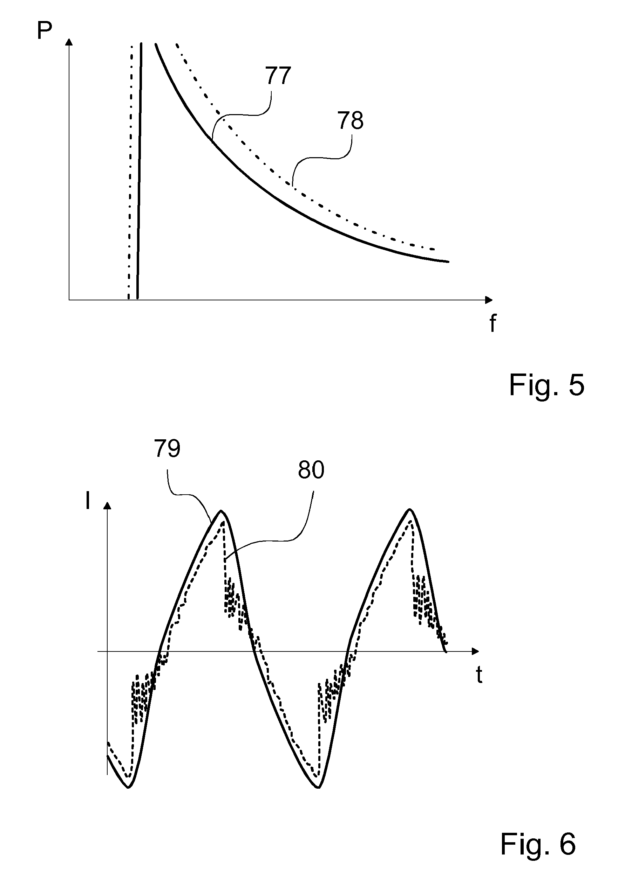

Die Hausgeräteinduktionsheizvorrichtung 12 weist weiterhin eine Steuereinheit 60 auf. Die Steuereinheit 60 ist dazu vorgesehen, in Abhängigkeit von einer zumindest für den ersten Induktor 20, bzw. für eine Parallelschaltung der Induktoren 20, 22 angeforderte Heizleistung und in Abhängigkeit von einer angeforderten Anzahl an parallel geschalteten Induktoren 20, 22, Schaltzustände des Schaltelements 26 und des weiteren Schaltelements 52 einzustellen. In einem ersten Betriebsmodus, in dem lediglich für den ersten Induktor 20 eine Heizleistung angefordert ist, hält die Steuereinheit 60 das Schaltelement 26 und das zweite Schaltelement 52 in einem trennenden Zustand. In einem zweiten Betriebszustand, in dem für eine Parallelschaltung der Induktoren 20, 22 eine Heizleistung angefordert ist, hält die Steuereinheit 60 das Schaltelement 26 in einem verbindenden Zustand, wobei das weitere Schaltelement 52 in einem trennenden Zustand gehalten wird. In diesem Betriebsmodus bewirkt die Parallelkapazität 24 einen langsamen Spannungsanstieg 81 an der Heizfrequenzeinheit 30, was zu niedrigen Schaltverlusten führt (Figur 4). Weiterhin verursacht das Vorhandensein der Parallelkapazität 24 eine Vergrößerung einer Resonanzfrequenz, was jedoch mit einer Erniedrigung einer theoretisch erreichbaren Leistung in Resonanznähe einhergeht, wodurch effektiv bei gleicher Leistung niedrigere Schaltfrequenzen und somit niedrigere Schaltverluste möglich sind (Figur 5). Gleichzeitig ist eine hohe Präzision der Steuereinheit 60 nötig, um bei einer sich einstellenden steileren Heizleistung-Heizfrequenzabhängigkeit sicher zu steuern.

Ausgehend von dem zweiten Betriebsmodus kann in einem dritten Betriebsmodus die Steuereinheit 60 in Abhängigkeit von einer Gargeschirrkopplung und in Abhängigkeit von einer angeforderten Heizleistung über das weitere Schaltelement 52 eine Resonanzkurve der parallel geschalteten Induktoren 20, 22 geschoben werden, um eine niedrige Heizfrequenz und somit geringe Schaltverluste zu erreichen. In einem vierten Betriebsmodus ist es denkbar, dass die Steuereinheit 60 das weitere Schaltelement 52 in einem verbindenden Zustand hält, während das Schaltelement 26 in einem trennenden Zustand gehalten wird. In dem vierten Betriebsmodus bildet die weitere Resonanzeinheit 50 eine Hauptresonanzeinheit des zweiten Induktors 22. Es ist ein paralleler Betrieb der Induktoren 20, 22 von einer gleichen Heizfrequenzeinheit 30 möglich, wobei jeder der Induktoren 20, 22 eine eigene Resonanzeinheit 40, 50 aufweist.

Weiterhin sind Ausgestaltungen möglich, in denen ein zusätzliches Schaltelement vorhanden ist, das dazu vorgesehen ist, die jeweiligen gemeinsamen Kontakte 41, 51 der Hauptresonanzeinheit 40 und der weiteren Resonanzeinheit 50 miteinander zu verbinden, um Resonanzkapazitäten 42, 43 der Hauptresonanzeinheit 40 des ersten Induktors 20 auch in einem Betriebsmodus anzupassen, in dem das Schaltelement 26 und das weitere Schaltelement 52 in einem trennenden Zustand gehalten sind.

Figur 3 zeigt einen zeitlichen Verlauf von elektrischen Kenngrößen in einem Betriebsmodus, in dem die Parallelkapazität 24 dem ersten Induktor 20 parallel geschaltet ist. Es ist ein Verlauf einer elektrischen Spannung 70 zwischen dem Heizfrequenzausgang 31 und dem gemeinsamen Kontakt 41, einen Strom 71 über dem Heizfrequenzausgang 31, einen Strom 72 über der Parallelkapazität 24 und eine Summe 73 von Strömen durch den ersten und zweiten Induktor 20, 22. Durch periodische Ansteuerung der Heizfrequenzeinheit 30 ergeben sich periodische Verläufe.

Figur 4 zeigt einen zeitlichen Verlauf von einer Spannung 74 und einem Strom 75 an einem Schaltelement 34, 35 der Heizfrequenzeinheit 30. Durch einen verzögerten Spannungsanstieg 81 nach einem Abschalten 76 des entsprechenden Schaltelements 34, 35 können geringe Schaltverlust erreicht werden.

Figur 5 zeigt einen Vergleich zwischen einer Resonanzkurve 77 im Fall eines Vorhandenseins und einer Resonanzkurve 78 im Fall eines Nichtvorhandenseins der Parallelkapazität 24.

Figur 6 zeigt im Betriebsmodus einer parallel geschalteten Parallelkapazität 24, einen Vergleich eines zeitabhängig gemessenen Stroms 79 in dem Fall, dass der Stromsensor 28 zwischen der Parallelkapazität 24 und dem ersten Induktor 20 angeordnet ist und einen Strom 80 in dem Fall, dass ein Stromsensor zwischen dem Heizfrequenzausgang 31 und der Parallelkapazität 24 angeordnet ist.

Vorteilhaft findet die Erfindung, wie dargestellt, in einem Kochfeld mit im Wesentlichen separaten Kochzonen Anwendung. Alternativ ist es denkbar, dass eine vergleichbare Ausgestaltung in einem Kochfeld mit zumindest einer variablen Kochfläche, insbesondere einem Matrixkochfeld, oder in einem Backofen Anwendung findet.

### Bezugszeichen

- 10: Hausgerät
- 12: Hausgeräteinduktionsheizvorrichtung
- 14: Induktor
- 16: Induktor
- 18: Kochfeldplatte
- 20: Induktor
- 22: Induktor
- 24: Parallelkapazität
- 26: Schaltelement
- 28: Stromsensor
- 30: Heizfrequenzeinheit
- 31: Heizfrequenzausgang
- 32: Leistungskontakt
- 33: Leistungskontakt
- 34: Schaltelement
- 35: Schaltelement
- 36: Snubberkapazität
- 37: Snubberkapazität
- 38: Freilaufdiode
- 39: Freilaufdiode
- 40: Hauptresonanzeinheit
- 41: Kontakt
- 42: Resonanzkapazität
- 43: Resonanzkapazität
- 50: Resonanzeinheit
- 51: Kontakt
- 52: Schaltelement
- 54: Resonanzkapazität
- 56: Resonanzkapazität
- 60: Steuereinheit
- 62: Spannungsversorgung
- 70: Spannung
- 71: Strom
- 72: Strom
- 73: Summe
- 74: Spannung
- 75: Strom
- 76: Abschalten
- 77: Resonanzkurve
- 78: Resonanzkurve
- 79: Strom
- 80: Strom
- 81: Spannungsanstieg

## Patentansprüche

1. Hausgeräteinduktionsheizvorrichtung, insbesondere Kochfeldinduktionsheizvorrichtung, mit zumindest einem ersten Induktor (20, 20'), zumindest einer Parallelkapazität (24) und zumindest einem, von einem Bestandteil einer Heizfrequenzeinheit (30) verschiedenen Schaltelement (26), das dazu vorgesehen ist, die Parallelkapazität (24) in zumindest einem Betriebsmodus anhaltend dem ersten Induktor (20) zumindest im Wesentlichen parallel zu schalten.

2. Hausgeräteinduktionsheizvorrichtung nach Anspruch 1, **gekennzeichnet durch** eine Heizfrequenzeinheit (30) und eine Hauptresonanzeinheit (40), wobei zumindest der erste Induktor (20) zwischen die Hauptresonanzeinheit (40) und die Heizfrequenzeinheit (30) geschaltete ist.

3. Hausgeräteinduktionsheizvorrichtung nach einem der vorhergehenden Ansprüche, **gekennzeichnet durch** zumindest einen zweiten Induktor (22) und zumindest ein Schaltelement (26), das dazu vorgesehen ist, den zweiten Induktor (22) in zumindest einem Betriebsmodus zumindest im Wesentlichen zu dem ersten Induktor (20) parallel zu schalten.

4. Hausgeräteinduktionsheizvorrichtung nach Anspruch 3, **dadurch gekennzeichnet, dass** das Schaltelement (26) sowohl die Parallelkapazität (24) als auch den zweiten Induktor (22) dem ersten Induktor (20) zumindest im Wesentlichen parallel schaltet.

5. Hausgeräteinduktionsheizvorrichtung nach einem der vorhergehenden Ansprüche, **gekennzeichnet durch** einen Stromsensor (28), der zumindest in dem Betriebsmodus zwischen der Parallelkapazität (24) und dem ersten Induktor (20) angeordnet ist und zu einer Leistungsbestimmung zumindest des ersten Induktors (20) genutzt wird.

6. Hausgeräteinduktionsheizvorrichtung zumindest nach Anspruch 3, **dadurch gekennzeichnet, dass** der erste und der zweite Induktor (20, 22) in zumindest einem Betriebsmodus eine gemeinsame Heizzone bilden.

7. Hausgeräteinduktionsheizvorrichtung zumindest nach Anspruch 3,
**gekennzeichnet durch** zumindest eine weitere Resonanzeinheit (50) und zumindest ein weiteres Schaltelement (52), das die weitere Resonanzeinheit (50) in zumindest einem Betriebsmodus in Reihe zu dem zweiten Induktor (22) schaltet.

8. Hausgeräteinduktionsheizvorrichtung nach einem der vorhergehenden Ansprüche, **gekennzeichnet durch** eine Steuereinheit (60), die einen Schaltzustand des zumindest einen Schaltelements (26, 52) in Abhängigkeit von einer zumindest für den ersten Induktor (20) angeforderten Heizleistung und/oder in Abhängigkeit von einer angeforderten Anzahl an parallel geschalteten Induktoren (20, 22) einstellt.

9. Hausgerät, insbesondere Kochfeld, mit zumindest einer Hausgeräteinduktionsheizvorrichtung (12, 12') nach einem der vorhergehenden Ansprüche.

10. Verfahren zum Betrieb einer Hausgeräteinduktionsheizvorrichtung (12, 12') nach einem der Ansprüche 1 bis 8.
